# FASCICULE DE BREVET EUROPEEN

(11) **EP 1 084 047 B1**
(45) Date de publication et mention de la délivrance du brevet: **22.01.2003**
(21) Numéro de dépôt: 99926412.0
(22) Date de dépôt: 25.05.1999
(51) Int. Cl.: B60C 15/06

(54) **BOURRELET RENFORCE DE PNEUMATIQUE RADIAL**
VERSTÄRKTER RADIALREIFENWULST
RADIAL TYRE REINFORCED TYRE BEAD

(30) Priorité: 05.06.1998 FR 9807146
(43) Date de publication de la demande: 21.03.2001
(73) Titulaire: Compagnie Générale des Etablissements MICHELIN-MICHELIN & CIE, 63040 Clermont-Ferrand Cedex 09 (FR)
(72) Inventeur: CORSI, Patrick, F-63260 Thuret (FR)
(74) Mandataire: Diernaz, Christian
(86) Numéro de dépôt international: EP9903606
(87) Numéro de publication internationale: WO99064259

(56) Documents cités:
- FR-A- 2 385 546
- FR-A- 2 435 359
- US-A- 3 095 027
- PATENT ABSTRACTS OF JAPAN vol. 011, no. 360 (M-645), 25 novembre 1987 (1987-11-25) & JP 62 137207 A (BRIDGESTONE CORP), 20 juin 1987 (1987-06-20)
- PATENT ABSTRACTS OF JAPAN vol. 096, no. 001, 31 janvier 1996 (1996-01-31) & JP 07 232520 A (OHTSU TIRE & RUBBER CO LTD:THE), 5 septembre 1995 (1995-09-05)

## Description

La présente invention concerne un pneumatique à armature de carcasse radiale, et plus particulièrement à un pneumatique "Poids Lourds", destiné à équiper des véhicules tels que les camions, tracteurs routiers, autobus, remorques et autres, et dans lequel une nouvelle structure de renforcement des bourrelets est adaptée en vue de l'amélioration de l'endurance desdits bourrelets.

En général, un pneumatique du type considéré comprend une armature de carcasse formée d'au moins une nappe de câbles métalliques, ancrée dans chaque bourrelet à au moins une tringle, en formant un retournement. L'armature de carcasse est radialement surmontée d'une armature de sommet, composée d'au moins deux nappes de câbles métalliques, croisés d'une nappe à la suivante en formant avec la direction circonférentielle des angles compris entre 10° et 45°. Les retournements d'armature de carcasse sont généralement renforcés par au moins une nappe de câbles métalliques orientés à un faible angle par rapport à la direction circonférentielle.

Dans le cas de la présence d'une seule nappe de renforcement de bourrelet, cette dernière peut être située le long du retournement d'armature de carcasse avec une extrémité radialement supérieure située au-dessus ou au-dessous de l'extrémité radialement supérieure du retournement d'armature de carcasse. Quant à l'extrémité radialement inférieure d'une telle nappe, elle est généralement située soit sur une droite parallèle à l'axe de rotation et passant approximativement par le centre de gravité de la section méridienne de la tringle d'ancrage de l'armature de carcasse, dans le cas d'un pneumatique possédant des bourrelets destinés à être montés sur des sièges de jante inclinés à 15° ± 2°, soit sur une droite parallèle à l'axe de rotation passant par un point situé entre le centre de gravité de la section méridienne de la tringle d'ancrage et le point de largeur axiale maximale de l'armature de carcasse, dans le cas de pneumatique possédant des bourrelets destinés à être montés sur des sièges de jante inclinés à 0° ou à 5° ± 1°. Dans ce deuxième cas, la nappe de renforcement du bourrelet est alors enroulée autour de la tringle, de sorte à présenter un brin axialement extérieur et un brin axialement intérieur, l'extrémité radialement supérieure du brin axialement intérieur étant généralement située au-dessous de l'extrémité radialement supérieure du brin axialement extérieur.

En outre, la durée de vie des pneumatiques "Poids-Lourds", du fait des progrès accomplis, du fait que certains roulages sont rendus moins pénalisants en ce qui concerne l'usure de la bande de roulement, est devenue telle qu'il est encore nécessaire d'améliorer l'endurance des bourrelets, et plus particulièrement des pneumatiques soumis à des roulages prolongés, roulages induisant souvent une température élevée des bourrelets, du fait des températures atteintes par les jantes de montage.

De nombreuses solutions ont été décrites pour améliorer l'endurance des bourrelets de pneumatiques, qu'ils soient destinés à être montés sur des jantes à sièges 15° ou des jantes plates ou à sièges 5° : par exemple, il a été proposé de remplacer la nappe de renforcement métallique par plusieurs nappes d'éléments de renforcement, textiles par exemple, croisés d'une nappe à la suivante et les dites nappes étant situées axialement soit du même côté du retournement, soit de part et d'autre dudit retournement, soit encore en partie le long du retournement et en partie le long de l'armature de carcasse.

L'endurance des bourrelets peut aussi être améliorée en disposant le long de l'armature de carcasse deux nappes de renforcement, alors que le retournement de ladite armature n'est pas renforcé.

A la lecture de la demande française FR 2 730 190, ladite amélioration peut être obtenue par la présence dans les bourrelets d'au moins une nappe de renforcement formée d'éléments métalliques circonférentiels, enroulée autour de la tringle, à l'extérieur de la partie enroulée de l'armature de carcasse, de sorte que les extrémités radialement supérieures respectivement du brin axialement extérieur et radialement supérieure du brin axialement intérieur soient radialement situées au-dessus d'une droite parallèle à l'axe de rotation et passant par le point de la tringle le plus éloigné dudit axe de rotation. L'armature de carcasse, formée de fils ou câbles radiaux, est ainsi, au niveau de sa surface de contact avec la tringle, formée, comme connu, d'éléments sensiblement circonférentiels qui sont généralement métalliques sous forme de fils, câbles, rubans ou feuillards enroulés, insérée entre lesdits éléments à orientation sensiblement circonférentielle et la nappe additionnelle d'éléments métalliques, eux aussi circonférentiels. Cette structure permet ainsi la reprise des efforts de tension subis par l'armature de carcasse, et ainsi minimise toutes les déformations en extrémités de retournement d'armature de carcasse, quelles que soient les conditions de roulage.

La solution d'une nappe de renforcement de bourrelet à éléments de renforcement circonférentiels n'apparaît pas être la solution techniquement et industriellement optimale pour des pneumatiques ayant des bourrelets destinés à être montés sur des jantes dites plates ou ayant des sièges inclinés à 5°, le facteur important ne semblant pas être la présence d'éléments circonférentiels.

Le brevet FR 2 435 359, correspondant au préambule de la revendication 1, en vue d'améliorer l'endurance des bourrelets d'un pneumatique à armature de carcasse radiale à une seule nappe d'éléments en acier, enseigne de disposer dans les dits bourrelets une armature de renforcement à éléments résistant à la traction inclinés par rapport à la direction circonférentielle du pneumatique et additionnellement une seconde armature de renforcement d'éléments radiaux textiles.

Dans le but d'alléger les pneumatiques pour véhicules lourds et se montant sur des jantes à sièges inclinés à 0° ou 5° ± 1°, de nombreuses tentatives ont été réalisées pour supprimer le brin axialement intérieur de la nappe de renforcement du bourrelet, et avoir, pour les deux types de jantes utilisées, sensiblement la même architecture d'armature de carcasse et de nappe de renforcement.

Si les dites solutions connues, ayant pour but d'éviter la déradialisation des câbles du retournement de l'armature de carcasse, ainsi que de minimiser les déformations radiales et circonférentielles respectivement subies par l'extrémité dudit retournement et l'extrémité radialement supérieure de la nappe de renforcement, ont amélioré l'endurance des renforts de bourrelet, la performance des pneumatiques se montant sur des jantes à sièges à 0° ou 5° ± 1° est par contre minorée par l'apparition et la propagation de cassures de la couche de caoutchouc extérieure recouvrant le bourrelet et assurant la liaison avec la jante.

L'invention se propose de remédier aux inconvénients ci-dessus.

Afin d'améliorer l'endurance d'un pneumatique appelé à porter de lourdes charges et ayant des bourrelets destinés à être montés sur des sièges de jante plats ou inclinés à 5°, ledit pneumatique, conforme à l'invention, comprenant au moins une armature de carcasse radiale, formée d'au moins une nappe d'éléments de renforcement inextensibles et ancrée dans chaque bourrelet B à une tringle pour former un retournement dont l'extrémité est située à une distance radiale H_{RNC} de la base de bourrelet, chaque bourrelet B étant renforcé par au moins deux armatures additionnelles de renforcement, au moins une première armature non enroulée autour de la tringle d'ancrage d'armature de carcasse, formée d'au moins une nappe d'éléments de renforcement radiaux textiles et située axialement à l'extérieur d'une deuxième armature, formée d'au moins une nappe d'éléments inextensibles faisant avec la direction circonférentielle un angle α tel que 0° ≤ α ≤ 45°, l'extrémité radialement intérieure de ladite première armature étant localisée entre les deux droites D et D', parallèles à l'axe de rotation et passant respectivement par les points de la tringle d'ancrage respectivement les plus et moins éloignés de l'axe de rotation, est caractérisé en ce que, vue en section méridienne, l'extrémité radialement extérieure de la première armature est située à une distance H_{LE} de la base du bourrelet D, comprise entre 80 % et 120 % de la distance H_{RNC}, alors que la deuxième armature, non enroulée autour de ladite tringle d'ancrage, a une extrémité radialement intérieure située entre la droite parallèle à l'axe de rotation passant par le centre de gravité de la section transversale de la tringle et la base D du bourrelet et une extrémité radialement extérieure à une distance H_{R} de ladite base, comprise entre 60 % et 75 % de H_{RNC}.

Des éléments de renforcement seront considérés comme radiaux, si l'angle qu'ils font avec la direction circonférentielle du pneumatique est compris dans un intervalle 80°-100°.

De même, il faut entendre, dans le cadre de l'invention, par extrémité radialement supérieure d'une armature de renforcement de bourrelet, qui peut être constituée d'une ou plusieurs nappes, l'extrémité de nappe d'armature la plus éloignée de l'axe de rotation, les nappes d'armature pouvant avoir des extrémités supérieures comprises dans un intervalle de distance radiale au plus égale à 20 mm. De même, l'extrémité radialement inférieure d'une armature de renforcement de bourrelet sera l'extrémité inférieure de nappe la moins éloignée de l'axe de rotation.

La première armature d'éléments de renforcement radiaux est avantageusement formée d'une seule nappe de câbles textiles, de polyamide aliphatique, composés de deux fils retordus, à au moins 250/250 t/m. Elle est préférentiellement séparée de la seconde armature par un profilé de mélange caoutchouteux d'épaisseur au moins égale à 2 mm.

La deuxième armature additionnelle de renforcement de bourrelet peut être formée d'au moins une nappe d'éléments de renforcement métalliques circonférentiels ; il est alors avantageux, pour faciliter la fabrication et en diminuer le coût, de choisir comme éléments de renforcement de ladite nappe des tronçons ou des ensembles de tronçons de câbles métalliques, de longueur circonférentielle inférieure à la longueur circonférentielle de l'axe moyen de la tringle. Elle peut aussi être formée, comme connu en soi, d'une seule nappe de câbles métalliques parallèles entre eux dans la nappe et faisant avec la direction circonférentielle un angle faible compris entre 5° et 30°. Dans tous les cas, elle est préférentiellement séparée du retournement d'armature de carcasse par un profilé de mélange caoutchouteux d'épaisseur au plus égale à 3 mm.

Les caractéristiques de l'invention seront mieux comprises à l'aide de la description qui suit et qui se réfère au dessin, illustrant à titre non limitatif des exemples d'exécution, et sur lequel la figure unique 1 représente schématiquement une variante de bourrelet conforme à l'invention.

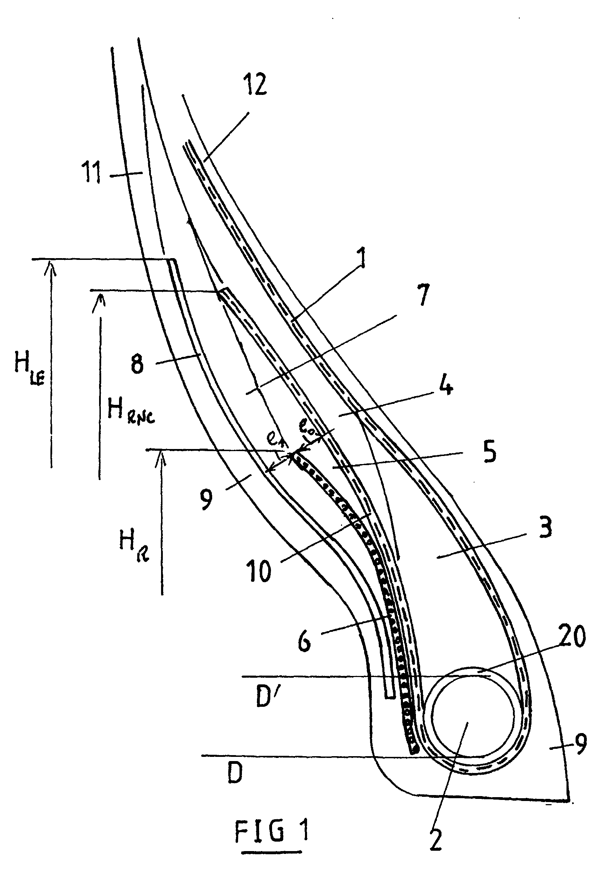

Le bourrelet B représenté sur la figure 1 est celui d'un pneumatique 10.00.R.20 X, destiné à être monté sur une jante comportant des sièges de jante inclinés à 5°. Ledit bourrelet est renforcé par une tringle (2). Autour de ladite tringle (2) est ancrée une armature de carcasse (1) composée d'une seule nappe de câbles métalliques. L'ancrage se fait par un retournement (10) autour de la couche (20) de mélange caoutchouteux qui recouvre la tringle (2), la distance radiale H_{RNC} séparant l'extrémité radialement supérieure dudit retournement (10), de la base du bourrelet, ladite base étant par convention représentée par 1a droite D parallèle à l'axe de rotation passant par le point de la tringle (2) le plus rapproché dudit axe de rotation, étant égale, dans l'exemple étudié du pneumatique de dimension 10.00.R.20, à 0,25 fois la hauteur H du pneumatique sur jante, cette dernière étant la distance radiale séparant le point du pneumatique radialement le plus éloigné de l'axe de rotation de la droite de mesure du diamètre nominal de la jante de montage, et égale à 270 mm. Entre l'armature de carcasse (1) et son retournement (10), radialement au-dessus de la tringle (2), est disposé un premier bourrage de tringle (3) en mélange caoutchouteux de dureté Shore A généralement élevée, ledit premier bourrage (3) étant prolongé radialement par un deuxième bourrage (4) en mélange caoutchouteux de dureté Shore A moins élevée que la précédente et l'extrémité radialement supérieure dudit bourrage (4) étant sensiblement située au niveau de la largeur axiale maximale du pneumatique.

Axialement à l'extérieur du retournement (10) de la nappe (1), est disposée une deuxième armature de renforcement de bourrelet composée, dans l'exemple décrit, d'une seule nappe (6), non retournée autour de la tringle (2). L'extrémité radialement supérieure de ladite nappe (6) est située par rapport à la base du bourrelet à une hauteur H_{R} égale à 50 mm, la distance H_{R} étant égale à 66 % de la distance H_{RNC}, l'extrémité radialement intérieure étant pratiquement située sur la droite parallèle à l'axe de rotation définissant la base du bourrelet. La nappe (6) de ladite deuxième armature est formée de câbles métalliques orientés à 22° par rapport à la direction circonférentielle. La moitié radialement supérieure de la nappe (6) est axialement séparée du retournement (10) d'armature de carcasse (1) par un profilé (5) de mélange caoutchouteux ayant une dureté Shore A sensiblement égale à la dureté de même nom du mélange constituant le bourrage (4), et dont l'épaisseur e₀, mesurée perpendiculairement au retournement (10) et au niveau de l'extrémité radialement supérieure de la nappe (6) est égale à 3 mm. Les deux extrémités radialement extérieures respectivement du retournement (10) de l'armature de carcasse (1) et de la nappe de renforcement (6) du bourrelet sont axialement à l'extérieur recouvertes par un quatrième profilé ou bourrage (7), dit de remplissage et prenant appui sur le deuxième bourrage de tringle (4), sur le profilé (5) et sur une partie du retournement (10), et dont l'épaisseur e₁, mesurée au niveau de l'extrémité radialement extérieure de la deuxième armature de renforcement de bourrelet, est égale à 2 mm.

Axialement à l'extérieur du bourrage de remplissage (7) et le long dudit bourrage est disposée la première armature de renforcement de bourrelet, composée d'une seule nappe (8) de câbles 94/2 (tex) en polyamide aliphatique retordus 485/485 t/m. De manière connue, une telle formule signifie que chaque retors ou câble est constitué par deux filés (fibres multifilamentaires), ayant chacun un titre de 94 tex avant torsion, qui sont tordus dans un premier temps individuellement à 485 t/m dans une direction donnée, puis tordus ensemble à 485 t/m en sens inverse dans un deuxième temps. Les dits câbles de la nappe (8) sont radiaux et font précisément dans l'exemple décrit un angle égal en moyenne à 89°. L'extrémité radialement extérieure de la nappe (8) est située à une distance radiale H_{LE} de la base du bourrelet égale à 80 mm, soit 106 % de la distance H_{RNC} séparant l'extrémité du retournement de nappe de carcasse (1) de ladite base. Quant à l'extrémité radialement intérieure de ladite nappe (8), elle est pratiquement située sur la droite parallèle à l'axe de rotation du pneumatique passant par le centre de gravité de la section transversale de la tringle d'ancrage (2), et entre la droite D, précédemment définie et la droite D', parallèle à l'axe de rotation et passant par le point de la tringle (2) le plus éloigné dudit axe.

La première nappe de renforcement (8) isole du restant du bourrelet axialement à l'extérieur le mélange caoutchouteux de protection (9), qui, comme connu en soi, entoure la majeure partie du bourrelet, ledit mélange (9) étant axialement à l'intérieur prolongé radialement à l'extérieur par les couches usuelles de renforts caoutchouteux et intérieures (12), alors qu'il est axialement à l'extérieur prolongé radialement à l'extérieur par la couche de flanc (11).

La présence combinée, axialement à l'extérieur du retournement (10) d'armature de carcasse, d'une première armature de renforcement (8) d'éléments textiles radiaux non enroulée autour de la tringle d'ancrage (2) de l'armature de carcasse radiale (1) et d'une deuxième armature de renforcement (6) qui minimise la déradialisation de câbles radiaux de l'armature de carcasse, permet non seulement une baisse importante des sollicitations des mélanges de caoutchouc constituant le bourrelet plus particulièrement aux extrémités de nappes, mais aussi une apparition nettement plus tardive des cassures de la couche protectrice (9), puisque les pneumatiques ainsi décrits ont réalisés, dans un roulage d'endurance pneumatique sur pneumatique, un kilométrage de 85 000 km (moyenne de deux résultats), alors que tous les pneumatiques dépourvus de nappe de câbles radiaux textiles n'ont réalisé sous les mêmes conditions de roulage qu'une moyenne de 32 500 km (moyenne d'une dizaine de pneumatiques).

## Revendications

1. Pneumatique, appelé à porter de lourdes charges et ayant des bourrelets B destinés à être montés sur des sièges de jante plats ou inclinés à 5°, comprenant au moins une armature de carcasse radiale (1), formée d'au moins une nappe d'éléments de renforcement inextensibles et ancrée dans chaque bourrelet B à une tringle (2) pour former un retournement (10) dont l'extrémité est située à une distance radiale H_{RNC} de la base de bourrelet, chaque bourrelet B étant renforcé par au moins deux armatures additionnelles de renforcement, au moins une première armature non enroulée autour de la tringle d'ancrage (2) d'armature de carcasse, formée d'au moins une nappe (8) d'éléments de renforcement radiaux textiles et située axialement à l'extérieur d'une deuxième armature, formée d'au moins une nappe (6) d'éléments inextensibles faisant avec la direction circonférentielle un angle α tel que 0° ≤ α ≤ 45°, l'extrémité radialement intérieure de ladite première armature étant localisée entre les deux droites D et D', parallèles à l'axe de rotation et passant respectivement par les points de la tringle d'ancrage (2) respectivement les plus et moins éloignés de l'axe de rotation, **caractérisé en ce que**, vue en section méridienne, l'extrémité radialement extérieure de la première armature est située à une distance H_{LE} de la base du bourrelet D, comprise entre 80 % et 120 % de la distance H_{RNC}, alors que la deuxième armature (6), non enroulée autour de ladite tringle d'ancrage (2), a une extrémité radialement intérieure située entre la droite parallèle à l'axe de rotation passant par le centre de gravité de la section transversale de la tringle (2)et la base D du bourrelet et une extrémité radialement extérieure à une distance H_{R} de ladite base, comprise entre 60 % et 75 % de H_{RNC}.

2. Pneumatique selon la revendication 1, **caractérisé en ce que** la première armature d'éléments de renforcement radiaux est avantageusement formée d'une seule nappe (8) de câbles textiles, en polyamide aliphatique, composés de deux fils retordus, à au moins 250/250 t/m.

3. Pneumatique selon l'une des revendications 1 ou 2, **caractérisé en ce que** la première armature de renforcement (8) est axialement séparée de ladite seconde armature (6) par un profilé (7) de mélange caoutchouteux d'épaisseur e₁ au moins égale à 2 mm.

4. Pneumatique selon l'une des revendications 1 à 3, **caractérisé en ce que** la deuxième armature additionnelle de renforcement de bourrelet est composée d'une seule nappe (6) de câbles métalliques parallèles entre eux dans la nappe et faisant avec la direction circonférentielle un angle faible compris entre 5° et 30°.

5. Pneumatique selon l'une des revendications 1 à 3, **caractérisé en ce que** la seconde armature (6) est axialement séparée du retournement (10) d'armature de carcasse (1) par un second profilé (5) de mélange caoutchouteux d'épaisseur e₀ au plus égale à 3 mm.

## Patentansprüche

1. Reifen bzw. Luftreifen, der dazu berufen ist, schwere Lasten zu tragen, und der Wülste B hat, die dazu bestimmt sind, auf Felgensitzen montiert zu werden, die flach sind oder um 5° geneigt sind, mit mindestens einer radialen Karkassenbewehrung (1), die aus mindestens einer Lage aus undehnbaren Verstärkungselementen gebildet ist und in jedem Wulst B an einem Wulstkern (2) verankert ist, um einen Umschlag (10) zu bilden, dessen Ende unter einem radialen Abstand H_{RNC} von der Unterseite des Wulstes gelegen ist, wobei jeder Wulst B durch mindestens zwei zusätzliche Verstärkungsbewehrungen verstärkt ist, mindestens eine erste Bewehrung nicht um den Verankerungs-Wulstkern (2) der Karkassenbewehrung herumgeschlagen ist, aus mindestens einer Lage (8) von radialen, textilen Verstärkungselementen gebildet ist und axial auf der Außenseite einer zweiten Bewehrung aus mindestens einer Lage (6) von undehnbaren Elementen gelegen ist, die zur Umfangsrichtung einen Winkel α bilden, so daß 0° ≤ α ≤ 45°, wobei das radial innere Ende der genannten ersten Bewehrung zwischen zwei Geraden D und D' liegt, die parallel zur Drehachse verlaufen und durch den jeweils am weitesten und am wenigsten weit entfernten Punkt des Verankerungs-Wulstkernes (2) hindurchlaufen, **dadurch gekennzeichnet, daß**, im Meridianschnitt gesehen, das radial äußere Ende der ersten Bewehrung in einem Abstand H_{LE} von der Unterseite des Wulstes D gelegen ist, der zwischen 80% und 120% des Abstands H_{RNC} ist, während die zweite Bewehrung (6), die nicht um den genannten Verankerungs-Wulstkern (2) herumgeschlagen ist, ein radial inneres Ende aufweist, das zwischen der Geraden, die parallel zur Drehachse verläuft und durch den Schwerpunkt des Querschnitts des Wulstkernes (2) hindurchläuft, und der Unterseite des Wulstes D liegt, sowie ein radial äußeres Ende unter einem Abstand H_{R} von der genannten Unterseite, der zwischen 60% und 75% von H_{RNC} beträgt.

2. Reifen nach Anspruch 1, **dadurch gekennzeichnet, daß** die erste Bewehrung aus radialen Verstärkungselementen vorteilhafterweise aus einer einzigen Lage (8) aus textilen Seilen aus aliphatischen Polyamid gebildet ist, die aus zwei gezwirnten Drähten mit mindestens 250/250 t/m (Umdrehungen/m) zusammengesetzt sind.

3. Reifen nach einem der Ansprüche 1 oder 2, **dadurch gekennzeichnet, daß** die erste Verstärkungsbewehrung (8) axial von der genannten zweiten Bewehrung (6) durch ein Profil (7) aus gummihaltiger bzw. gummiartiger Mischung mit einer Dicke e₁ getrennt ist, die mindestens 2 mm beträgt.

4. Reifen nach einem der Ansprüche 1 bis 3, **dadurch gekennzeichnet, daß** die zweite, zusätzliche Wulst-Verstärkungsbewehrung aus einer einzigen Lage (6) aus Metallseilen zusammengesetzt ist, die untereinander in der Lage parallel verlaufen und zur Umfangsrichtung einen geringen Winkel bilden, der zwischen 5° und 30° liegt.

5. Reifen nach einem der Ansprüche 1 bis 3, **dadurch gekennzeichnet, daß** die zweite Bewehrung (6) axial vom Umschlag (10) der Karkassenbewehrung (1) durch ein zweites Profil (5)) aus gummihaltiger bzw. gummiartiger Mischung mit einer Dicke e₀ getrennt ist, die höchstens 3 mm beträgt.

## Claims

1. A tyre required to bear heavy loads and having beads B intended to be mounted on flat rim seats or rim seats which are inclined at 5°, comprising at least one radial carcass reinforcement (1), formed of at least one ply of inextensible reinforcement elements and anchored in each bead B to a bead wire (2) to form an upturn (10), the end of which is located at a radial distance H_{RNC} from the base of the bead, each bead B being reinforced by at least two additional reinforcement armatures, at least one first armature not wound around the anchoring bead wire (2) of the carcass reinforcement, formed of at least one ply (8) of radial textile reinforcement elements and located axially to the outside of a second armature, and formed of at least one ply (6) of inextensible elements forming an angle α with the circumferential direction such that 0° ≤ α ≤ 45°, the radially inner end of said first armature being located between the two straight lines D and D', parallel to the axis of rotation and passing respectively through those points of the anchoring bead wire (2) which are respectively farthest and least far from the axis of rotation, **characterised in that**, viewed in meridian section, the radially outer end of the first armature is located at a distance H_{LE} from the base of the bead D of between 80% and 120% of the distance H_{RNC}, whereas the second armature (6), which is not wound around said anchoring bead wire (2), has a radially inner end located between the straight line parallel to the axis of rotation passing through the centre of gravity of the cross-section of the bead wire (2) and the base D of the bead and a radially outer end at a distance H_{R} from said base of between 60% and 75% of H_{RNC}.

2. A tyre according to Claim 1, **characterised in that** the first armature of radial reinforcement elements is advantageously formed of a single ply (8) of aliphatic polyamide textile cables, composed of two plied cords, at at least 250/250 twists per metre.

3. A tyre according to one of Claims 1 or 2, **characterised in that** the first reinforcement armature (8) is axially separated from said second armature (6) by a profiled element (7) of rubber mix of a thickness e₁ of at least 2 mm.

4. A tyre according to one of Claims 1 to 3, **characterised in that** the second additional bead reinforcement armature is formed of a single ply (6) of metal cables parallel to each other in the ply and forming a small angle of between 5° and 30° with the circumferential direction.

5. A tyre according to one of Claims 1 to 3, **characterised in that** the second armature (6) is axially separated from the upturn (10) of the carcass reinforcement (1) by a second profiled element (5) of rubber mix of a thickness e₀ of at most 3 mm.
